# FASCICULE DE BREVET EUROPEEN

(11) **EP 0 661 242 B1**
(45) Date de publication et mention de la délivrance du brevet: **28.04.1999**
(21) Numéro de dépôt: 94402967.7
(22) Date de dépôt: 21.12.1994
(51) Int. Cl.: C04B 28/34

(54) **Préparation de ciments phosphomagnésiens**
Herstellung von Phosphomagnesiumzementen
Preparation of phosphomagnesium cements

(30) Priorité: 31.12.1993 FR 9315987
(43) Date de publication de la demande: 05.07.1995
(73) Titulaire: RHODIA CHIMIE, 92408 Courbevoie Cédex (FR)
(72) Inventeur: Fogel, William, F-30100 Ales (FR); Garcin, Eric, F-69003 Lyon (FR)
(74) Mandataire: Delenne, Marc

(56) Documents cités:
- EP-A- 0 136 378
- FR-A- 2 291 951

## Description

La présente invention a trait à un procédé de préparation de ciments phosphomagnésiens ainsi qu'à des compositions pour obtenir de tels ciments.

Les ciments phosphomagnésiens trouvent l'une de leurs applications principales dans la réfection rapide de routes, ponts, et pistes d'aéroport. Ainsi, ils sont utilisés pour obturer des craquelures, des trous ou recouvrir des zones dégradées. En effet, ces ciments, outre une bonne adhérence aux ciments dits de Portland, présentent des propriétés mécaniques de résistance à la flexion et à la compression importantes, les rendant particulièrement appropriés pour ce type d'applications. Par ailleurs, ces ciments ont des temps de prise pouvant être aussi faibles que quelques dizaines de minutes. Ainsi, les routes ou autres voies réparées, peuvent être ouvertes à nouveau au trafic seulement quelques heures après leur traitement.

Cependant, ils présentent l'inconvénient d'être sensibles à l'eau, et de voir diminuer leurs propriétés mécaniques lorsqu'ils sont immergés ou simplement mis en contact avec un tel élément.

Une solution proposée a été de traiter en surface de tels ciments, avec un agent hydrofugeant.

Cependant, même si les propriétés sont améliorées, ce type de traitement n'est pas totalement satisfaisant en ce sens qu'il n'est pas permanent. En effet, quelles que soient les applications ultérieures du ciment, et surtout pour celles mentionnées précédemment, celui-ci sera toujours soumis à une usure, plus ou moins intense, entraînant une disparition plus ou moins rapide du revêtement. De ce fait, un nouveau traitement en surface du ciment est nécessaire si l'on désire que celui-ci conserve des propriétés mécaniques acceptables.

Il est donc clair que ce type de solution n'est pas satisfaisant sur le plan des propriétés finales du ciments ni sur le plan économique puisque le traitement doit être répété à intervalles de temps réguliers.

La présente invention a pour but de pallier les inconvénients mentionnés ci-dessus en proposant un procédé de préparation de ciments phosphomagnésiens permettant d'obtenir des ciments dont la sensibilité à l'eau considérablement diminuée et ceci d'une façon durable.

Ainsi, l'invention a pour objet un procédé de préparation de ciment phosphomagnésien consistant à mélanger des éléments constitutifs comprenant un premier constituant à base de phosphore et un second constituant à base de magnésium, appelés phase liante, avec au moins un composé choisi parmi les polyorganohydrogénosiloxanes et de l'eau. un premier constituant à base de phosphore, un second constituant à base de magnésium, au moins un composé choisi parmi les silicones et de l'eau.

L'invention a de même pour objet une composition comprenant un premier constituant à base de phosphore, un second constituant à base de magnésium, appelés phase liante, et au moins un composé choisi parmi les polyorganohydrogénosiloxanes, réparti dans la composition.

Mais d'autres avantages et caractéristiques de l'invention apparaîtront plus clairement à la lecture de la description et des exemples qui vont suivre.

Le document EP 136 378 décrit l'utilisation de composés silicones au cours de la préparation de résines inorganiques à base de phosphore et de magnésium, ces composés étant notamment utilisés pour la formation d'éléments cellulaires, dans lesquels ils permettent la stabilisation de la mousse créée par l'agent de "soufflage" (blowing agent). Les silicones ne sont pas décrits comme étant des polyorganohydrogénosiloxanes.

Ici et pour toute la description, on utilisera le terme "ciment" pour nommer à la fois les compositions comprenant les premier et second constituants, avec, le cas échéant, les additifs usuels des ciments, et les compositions à base des deux constituants précités et éventuellement les additifs classiques des ciments, comprenant en outre des granulats.

Pour des raisons de clarté, les éléments constitutifs du ciment phosphomagnésien vont tout d'abord être décrits.

Le ciment susceptible d'être obtenu selon l'invention comprend donc une phase liante composée d'un premier constituant à base de phosphore et d'un second constituant à base de magnésium.

Tous les composés du phosphore sont utilisables dans la mesure où ils comprennent du pentoxyde de phosphore, disponible directement ou sous la forme d'un précurseur.

Ainsi, à titre de composé à base de phosphore, on peut mentionner sans intention de se limiter, le pentoxyde de phosphore, l'acide phosphorique ou des dérivés comme l'acide orthophosphorique, l'acide pyrophosphorique, l'acide polyphosphorique, ou encore les sels de tels acides, comme les phosphates, les hydrogénophosphates, les orthophosphates, les pyrophosphates, les polyphosphates, les tripolyphosphates, les tétrapolyphosphates, d'aluminium, de calcium, de potassium, de magnésium, d'ammonium, ou leurs mélanges.

Il est à noter que les rejets contenant du phosphore des industries fabriquant des fertilisants, ou encore des aciéries (décapage de l'acier, traitement pour réduire la corrosion) peuvent être employés comme constituant à base de phosphore. L'acide phosphorique vert peut de même être utilisé dans la présente invention.

Selon un mode de réalisation particulier de l'invention on utilise les sels des acides à base de phosphore mentionnés auparavant.

De préférence, on met en oeuvre des phosphates, des hydrogénophosphates de potassium, de magnésium, d'ammonium, ou leurs mélanges. D'une façon encore plus preferée, le constituant à base de phosphore est le dihydrogénophosphate d'ammonium.

Le constituant à base de phosphore peut se présenter indifféremment sous une forme solide ou liquide.

De préférence, ledit constituant est utilisé sous une forme solide.

Selon une première variante, le constituant se trouve sous la forme de particules dont la granulométrie est plus particulièrement d'au plus 300 µm. Il est à noter que cette valeur n'est pas critique et que, s'il est possible d'utiliser des constituants dont la taille des particules est supérieure à 300 µm, un broyage avant incorporation dans la composition selon l'invention peut être souhaitable.

Selon une seconde variante, le constituant est utilisé sous une forme adsorbée sur un support poreux. A titre de support, on peut mentionner par exemple les terres de diatomées, l'argile, la bentonite, la silice, l'alumine. L'adsorption est effectuée de manière connue en soi. Ainsi, d'une façon classique le constituant à base de phosphore, en solution ou en suspension, est mis en contact avec le support, sous agitation, puis la suspension résultante est chauffée de façon à faire évaporer le liquide en excès. Cette opération peut de même être réalisée par imprégnation du support dans un tambour ou sur disque tournant.

Le second élément de la phase liante est au moins un constituant à base de magnésium.

Tout composé à base de magnésium convient à la présente invention dans la mesure où il réagit avec le premier constituant, en présence d'eau.

A titre d'exemple, on peut citer comme convenant à la mise en oeuvre de l'invention, les constituants suivants : l'oxyde de magnésium, l'hydroxyde de magnésium, le carbonate de magnésium.

Selon un mode de réalisation préféré, on utilise un constituant à base d'oxyde de magnésium. Convient notamment la magnésie dite "dead burned" habituellement obtenue après calcination de carbonate de magnésium, à des températures supérieures à 1200°C.

D'une façon avantageuse, ledit oxyde de magnésium peut être mis en oeuvre sous une forme pure ou peut éventuellement comprendre au moins un élément du type calcium, silicium, aluminium ou encore fer ces éléments se trouvant en général sous forme d'oxyde ou d'hydroxyde. A titre d'exemple de ce type de composé, on peut citer la dolomie, mélange comprenant notamment de l'oxyde de magnésium et de l'oxyde de calcium.

Si l'oxyde de magnésium est utilisé sous forme pure, la pureté dudit oxyde, est d'au moins 80 %.

On utilise de préférence un constituant à base de magnésium dont la surface spécifique est inférieure à 2 m²/g. Plus particulièrement, la surface spécifique est inférieure à 1 m²/g.

Par ailleurs, la granulométrie dudit constituant est habituellement comprise entre 10 et 500 µm. Il serait envisageable d'utiliser des composés dont la granulométrie se trouve en dehors de la gamme précitée, mais sans que cela n'apporte d'avantages particuliers. Ainsi, si la granulométrie est supérieure à 500 µm, une étape de broyage préalable à l'incorporation dans la composition peut être nécessaire. Par ailleurs, si la granulométrie desdits constituants était inférieure à 10 µm, on pourrait constater une modification des propriétés de la composition mise en contact avec l'eau. On peut notamment constater un accroissement de la vitesse de prise du ciment, sauf à augmenter la teneur en agent retardant la prise, dont il sera question dans la suite de la description. De ce fait, le ciment obtenu selon le procédé de l'invention pourrait être moins intéressant sur le plan de la mise en oeuvre ou sur le plan économique.

Il est à noter que les deux constituants décrits auparavant, s'ils se présentent sous forme solide, peuvent éventuellement faire l'objet d'une étape de broyage avant leur utilisation dans le procédé selon l'invention.

La proportion du constituant à base de magnésium (exprimée en poids de MgO) rapportée à celle du constituant à base de phosphore (exprimée en poids de P₂O₅) est plus particulièrement comprise entre 1 et 3.

La phase liante, soit les constituants à base de phosphore et de magnésium, représente 10 à 40 parties en poids. De préférence, la phase liante représente 15 à 30 parties en poids

Le ciment obtenu par le procédé selon l'invention peut comprendre en outre à titre d'élément constitutif, un agent retardant la prise. Plus particulièrement, ces agents sont choisis parmi des composés susceptibles de complexer le magnésium.

Ces derniers peuvent être notamment des acides carboxyliques, tels que les acides citrique, oxalique, tartrique, des acides, esters ou sels contenant du bore, des acides, esters ou sels contenant du phosphore, comme le tripolyphosphate de sodium, le sulfate ferreux, le sulfate et lignosulfonate de sodium, le chlorure de zinc, I'acétate de cuivre, le gluconate de sodium, le sulfate acétate de sodium cellulose, le produit de la réaction du formaldéhyde avec l'aminolignosulfate, le dialdéhyde amidon, la N,N-diméthyloldihydroxyéthylène urée, les silicofluorures, le tal oil et le sucrose, ces composés étant pris seuls ou en mélange.

De préférence, on utilise, seuls ou en mélange, les acides carboxyliques, et de préférence, les acides, esters ou sels contenant du bore.

Ainsi, dans cette dernière catégorie de composés, on peut mentionner, sans intention de se limiter, l'acide borique et ses sels, tels que les sels de métaux alcalins, comme le sodium (borax), les sels d'amine ou d'ammonium. Les esters de l'acide borique conviennent aussi à la mise en oeuvre de l'invention, comme les trialkyloxyborates, les triaryloxyborates.

Selon un mode particulier, l'additif est mis en oeuvre sous la forme d'une poudre dont le diamètre moyen est de 10 à 200 µm.

La quantité d'agent retardant dans le ciment final est de 0 à 4 parties en poids.

Une caractéristique importante du procédé selon l'invention tient au fait que l'on utilise au moins un composé choisi parmi les polyorganohydrogénosiloxanes.

Les silicones susceptibles d'être mis en oeuvre sont des composés comportant des enchaînements polysiloxaniques de type RSiO_{0,5} (motif M), R₂SiO (motif D), R₃SiO_{1,5} (motif T) et SiO₂ (motif Q). Dans ces formules, les radicaux R, identiques ou différents, peuvent être l'hydrogène, des radicaux alkyles linéaires ou ramifiés, des radicaux vinyle, phényle, trifluoro-3,3,3 propyle.

Plus particulièrement, les radicaux alkyles comprennent 1 à 8 atomes de carbone. On peut citer entre autres les radicaux méthyle, éthyle, propyle, isopropyle, tertiobutyle, n-hexyle, n-octyle, le radical méthyle étant préféré.

Tous les polyorganohydrogénosiloxanes sont suceptibles de convenir à la mise en oeuvre de l'invention. De préférence, les silicones utilisés dans l'invention présentent un nombre de motifs compris entre 30 et 120.

Selon un mode particulier les polyorganohydrogénosiloxanes mis en oeuvre comprennent principalement des motifs M et D.

Ils peuvent se présenter indifféremment sous la forme d'une solution, d'un solide, et plus particulièrement sous la forme d'une résine, d'une huile ou d'une émulsion, de préférence, dans l'eau.

La quantité de polyorganohydrogénosiloxane utilisé dans le procédé selon l'invention est inférieure ou égale à 2 parties en poids. De préférence, cette quantité est inférieure ou égale à 1 partie en poids.

Les ciments susceptibles d'être obtenus par le procédé selon l'invention comprennent de plus des granulats, en tant qu'éléments constitutifs.

A titre d'exemples de tels composés, on peut mentionner la silice, le sable, l'alumine, la zircone, l'oxyde de zirconium, la dolomie brute, le minerai de chrome, le calcaire, le clinker, la vermiculite, la perlite, les cendres volantes, la fumée de silice condensée, ces composés étant utilisés seuls ou en mélange.

Selon un mode de réalisation préféré de l'invention, on utilise du sable, celui-ci étant ou non en combinaison avec des cendres volantes et'ou des fumées de silice condensée.

Plus particulièrement le sable utilisé est conforme à la norme AFNOR NFP 15-403.

Les cendres volantes pouvant être utilisées sont en général des cendres silicoalumineuses issues de la combustion dans les centrales thermiques notamment.

La granulométrie de ces cendres est habituellement comprise entre 0,5 et 200 µm.

La fumée de silice condensée, éventuellement constituant de la composition selon l'invention, présente en général une surface spécifique comprise entre 20 et 30 m²/g.

La quantité de granulats utilisée est comprise entre 60 et 90 parties en poids. De préférence, la quantité de granulats est comprise entre 65 et 85 parties en poids.

Plus particulièrement, la teneur en cendres volantes et/ou en fumées de silice condensée, comprise dans les granulats, varie entre 4 et 6 parties en poids.

Le ciment susceptible d'être obtenu par le procédé selon l'invention comprend par ailleurs, a titre d'éléments constitutifs, tous les types d'additifs connus entrant généralement dans la composition des ciments.

Ainsi, a titre d'additifs supplémentaires éventuels, on peut aussi mentionner les fluidifiants comme par exemple le lignosulfonate de sodium et les condensés de naphtalène sulfonate, le naphtalène, le tripolyphosphate, l'hexamétaphosphate de sodium, l'hydrogénophosphate d'ammonium, la mélanine, les alkyles siliconates.

Des agents antimousse peuvent de même être utilisés dans le procédé selon l'invention. A titre d'exemple, on peut citer notamment les antimousses a base de polydiméthyl-siloxanes.

D'une façon générale, de tels additifs ne représentent pas plus de 5 parties en poids. De préférence, la quantité d'additifs est comprise entre 0 et 2 parties en poids.

Le procédé selon l'invention consiste a mélanger les divers éléments précités avec de l'eau.

On peut procéder essentiellement de deux façons différentes, c'est-à-dire apporter tous les éléments constitutifs du ciment, et l'eau, simultanément ou séparément. Selon cette dernière possibilité, on prépare en général une composition comprenant la phase liante, les granulats, le cas échéant l'agent retardant et tout ou partie des additifs éventuels précités. On mélange ensuite ladite composition avec de l'eau, celle-ci comprenant, si tel est le cas, les éléments non introduits dans l'étape antérieure de préparation de la composition.

Dans le cas d'une préparation préalable d'une composition, il est a noter que le silicone mis en oeuvre dans le procédé selon l'invention, peut être introduit en tant que constituant de la composition ou bien encore comme additif apporté avec l'eau. Il est a noter que ces deux possibilités peuvent être mises en oeuvre simultanément. L'essentiel est que le polyorganohydrogénosiloxane soit réparti dans le ciment résultant et plus particulièrement réparti de façon homogène dans la masse dudit ciment.

La quantité d'eau ajoutée est telle que l'on obtienne une pâte plastique, homogène et malléable.

Habituellement la quantité d'eau ajoutée est telle qu'elle ne dépasse pas 15 % en poids et plus particulièrement plus de 10 % en poids, rapporté au poids de la phase liante, les granulats et le cs échéant l'agent retardant.

Le mélange des éléments constitutifs du ciment se fait dans des conditions cisaillantes, en utilisant par exemple un malaxeur.

L'opération de mélange est avantageusement effectuée à une température voisine de la température ambiante.

La durée de l'opération de mélange est comprise entre quelques minutes et 1 heure.

Le temps de prise du ciment est avantageusement inférieur à 2 heures et plus particulièrement inférieur à 1 heure.

Ainsi que cela a été indiqué plus haut, la présente invention a pour objet une composition pour ciment phosphomagnésien. Celle-ci comprend un premier constituant à base de phosphore, un second constituant à base de magnésium, appelés phase liante, et au moins un composé choisi parmi les polyorganohydrogénosiloxanes, reparti dans la composition.

Tout ce qui a été dit précédemment concernant lesdits constituants, les polyorganohydrogénosiloxanes et les additifs pouvant entrer dans la composition du ciment reste valable et ne sera pas repris ici.

Selon un mode particulier de réalisation de l'invention, la composition présente les proportions suivantes, exprimées en parties en poids :

| | |
|---|---|
| - phase liante : | 10 - 40 |
| proportion MgO/ P₂O₅ : | 1 à 3 |
| - granulats : | 60- 90 |
| - agent retardant : | 0 - 4 |
| - polyorganohydrogénosiloxane : | ≤ 2 |
| - additifs : | 0 - 5 |

Selon un mode de réalisation préféré de l'invention, la composition présente les proportions suivantes, exprimées en parties en poids :

| | |
|---|---|
| - phase liante : | 15 - 30 |
| proportion MgO/ P₂O₅ : | 1 à 3 |
| - granulats : | 65- 85 |
| - agent retardant : | 0 - 4 |
| - polyorganohydrogénosiloxane : | ≤ 1 |
| - additifs : | 0 - 2 |

La composition selon l'invention est obtenue par mélange des divers éléments précités. L'homme du métier est à même de choisir, selon la forme sous laquelle se trouvent les divers éléments constitutifs, quel ordre d'introduction convient le mieux, sachant que la principale condition est de ne pas mettre en contact les constituants à base de phosphore et de magnésium, en présence d'eau, pour ne pas initier la réaction entre ces deux constituants et provoquer une solidification.

Si, par exemple, l'un ou plusieurs desdits éléments contient de l'eau, on pourra soit le sécher par tout moyen connu avant de l'utiliser pour préparer la composition, ou bien effectuer une étape de séchage intermédiaire, durant la fabrication de la composition, de façon à ce que les deux constituants précités ne se trouvent pas simultanément en présence d'eau.

Il est aussi possible de ne l'utiliser qu'au moment de la préparation du ciment proprement dite, s'il est préférable d'utiliser le ou les éléments en question sous une forme apportant de l'eau. Cependant, il peut être plus avantageux de disposer d'une composition la plus complète possible, dans le but, notamment de simplifier la préparation ultérieure du ciment.

Le mélange est effectué dans tout type de mélangeur.

L'opération de mélange est réalisée à une température comprise entre la température ambiante et 100°C.

La durée est de quelques minutes à 4 heures.

La composition ainsi obtenue est stockable pour une durée indéterminée dans la mesure où elle ne se trouve pas entreposée en présence d'eau.

Des exemples concrets mais non limitatifs de l'invention vont maintenant être donnés.

Dans les exemples qui vont suivre, les modes opératoires utilisés pour la préparation de la composition selon l'invention et la préparation d'éprouvettes de ciment pour obtenir des valeurs de résistance en flexion et compression sont les suivants:

### Préparation de la composition:

On prépare un mélange comprenant les constituants à base de phosphore et de magnésium, les agrégats et l'agent retardant, et l'on homogénéise celui-ci durant environ 1 heure sur un bâti à rouleaux.

L'eau de gâchage, ainsi que divers additifs (antimousse, fluidifiants, par exemple), sont pesés puis placés dans un malaxeur (conforme à la norme AFNOR P15-411 (ASTM C305)) sous agitation lente (de 60 tr/mn).

On verse alors rapidement le mélange que l'on agite 30 secondes sous une agitation lente puis 4 minutes sous une agitation rapide (120 tr/mn).

### Mesures de résistances mécaniques.

### Préparation d'éprouvette: norme AFNOR P15-413

Après malaxage, le mortier est transvasé dans des moules en acier doux.

Le moule rempli est fixé sur un appareil à chocs dont le rôle est de mettre en place le mortier. Le fonctionnement est le suivant:

Le moule est fixé sur une table, mue par une came qui provoque à chaque tour une chute de 15 mm de haut. Une durée de 60 chocs a été fixée.

On démoule après une heure et les éprouvettes sont séchées à 21°C sous 50 % d'humidité relative.
La mesure de la résistance en flexion correspond à la mesure de la pression nécessaire pour casser une éprouvette placée sur une tête à 3 points. On réalise une valeur moyenne sur les trois éprouvettes préparées.
La mesure de la résistance en compression est obtenue en utilisant des éprouvettes cassées précédemment (6 morceaux). Elles sont placées entre deux mâchoires de 4 x 4 cm et compressées jusqu'à éclatement.

Le résultat pris en compte est la valeur moyenne sur les 6 morceaux.

### EXEMPLE 1 COMPARATIF

On prépare la composition suivante (valeurs données en parties en poids) :

| | | |
|---|---|---|
| NH₄H₂PO₄ (MAP B - Rhône-Poulenc) | 40 µm | 11,5 |
| MgO (Insulmag 4 - Steetley) | 20 µm | 13,5 |
| | Surface spécifique < 1 m²/g | |
| H₃BO₃ _{:} (Prolabo) | 90 µm | 1 |
| Sable Afnor NFP 15-403 : | - | 70 |
| Cendres volantes : | 0,5 - 200µm | 5 |
| Eau | - | 7,5 |
| et antimousse (Rhodorsil® RH414-Rhône-Poulenc) : | - | 0,23 |

On mélange les constituants à base de phosphore, de magnésium, le sable, les cendres volantes et l'agent retardant dans un malaxeur puis on homogénéise ledit mélange pendant 2 heures environ.

L'eau de gâchage, ainsi que l'antimousse, sont pesés puis placés dans le mélangeur mis en contact avec le mélange obtenu précédemment (norme AFNOR P 15-411).

Après malaxage, le mélange résultant est vibré 2 minutes à l'aide d'une aiguille vibrante mécanique, puis transvasé dans des moules en acier doux où 3 éprouvettes de mortier sont obtenues.

On démoule après 1 heure et les éprouvettes sont séchées à 21°C sous 50 % d'humidité relative durant 7 jours.
Après séchage, 3 d'entre elles sont immergées dans l'eau et 3 autres laissées à l'air durant 7 jours.
Le temps de prise de cette formulation est de 30 minutes.

On mesure ensuite la résistance en flexion et en compression des éprouvettes comme indiqué.
Les résultats sont rassemblés dans le tableau suivant:

| Traitement | 14 jours à sec | 7 jours à sec + 7 jours eau | Δ |
|---|---|---|---|
| Résistance en compression (kg/cm²) | 630 | 440 | -30,2 % |
| Résistance en flexion (kg/cm²) | 120 | 100 | -16,7 % |

### EXEMPLE 2 :

On réalise des éprouvettes selon la composition de l'exemple 1 en rajoutant 1 % en poids d'huile silicone méthyle hydrogénée Rhodorsil® H68 (Rhône-Poulenc), par rapport aux solides, dans l'eau de gâchage.
Les résultats de résistances en flexion et en compression sont rassemblés dans le tableau ci-dessous:

| Traitement | 14 jours à sec | 7 jours à sec + 7 jours eau | Δ |
|---|---|---|---|
| Résistance en compression (kg/cm²) | 630 | 590 | -6,3 % |
| Résistance en flexion (kg/cm²) | 100 | 130 | +30,0 % |

Ce tableau montre que l'ajout de 1 % d'huile Rhodorsil® H68 permet de conserver à sec la même résistance en compression que le témoin et on note une forte amélioration en milieu humide (diminution de la perte en résistance selon les deux types de traitements).

A sec, même si l'on note une baisse de la résistance en flexion entre le témoin et les essais contenant de l'huile Rhodorsil® H68, en milieu humide, l'ajout d'huile améliore nettement la résistance du matériau (+ 30,0 %).

## Revendications

1. Procédé de préparation d'un ciment phosphomagnésien, caractérisé en ce que l'on mélange des éléments constitutifs comprenant un premier constituant à base de phosphore et un second constituant à base de magnésium, appelés phase liante, avec de l'eau et au moins un composé choisi parmi les polyorganohydrogénosiloxanes.

2. Procédé selon la revendication précédente, caractérisé en ce que l'on utilise une quantité de polyorganohydrogénosiloxane inférieure ou égale à 2 parties en poids et de préférence inférieure ou égale à 1 partie en poids.

3. Procédé selon l'une des revendications précédentes, caractérisé en ce que l'on utilise un composé à base de phosphore choisi parmi le pentoxyde de phosphore, l'acide phosphorique, des dérivés d'acide phosphorique ou des sels de tels acides, ceux-ci étant utilisés seuls ou en mélange.

4. Procédé selon la revendication précédente, caractérisé en ce que l'on utilise des phosphates ou hydrogénophosphates de potassium, de magnésium, d'ammonium, et de préférence le dihydrogénophosphate d'ammonium.

5. Procédé selon l'une des revendications précédentes, caractérisé en ce que l'on utilise un composé à base de magnésium choisi parmi l'oxyde de magnésium, l'hydroxyde de magnésium, le carbonate de magnésium.

6. Procédé selon la revendication précédente, caractérisé en ce que l'on utilise un oxyde de magnésium comprenant éventuellement au moins un élément du type calcium, silicium, aluminium ou encore fer : ces éléments se trouvant en général sous forme d'oxyde ou d'hydroxyde.

7. Procédé selon la revendication précédente, caractérisé en ce que l'on utilise la magnésie dite "dead burned" ou la dolomie.

8. Procédé selon l'une des revendications 5 à 7, caractérisé en ce que l'on utilise un constituant à base de magnésium dont la surface spécifique est inférieure à 2 m²/g, et plus particulièrement, inférieure à 1 m²/g.

9. Procédé selon l'une des revendications précédentes, caractérisé en ce que la proportion de constituant à base de magnésium (exprimée en poids de MgO) rapportée à celle du constituant à base de phosphore (exprimée en poids de P₂O₅) est comprise entre 1 et 3.

10. Procédé selon l'une des revendications précédentes, caractérisé en ce que les constituants à base de phosphore et de magnésium, représentent 10 à 40 parties en poids et de préférence, 15 à 30 parties en poids.

11. Procédé selon l'une des revendications précédentes, caractérisé en ce que l'on utilise, en tant qu'élément cons:tutif, un agent retardant choisi parmi l'acide borique et ses sels, tels que les sels de métaux alcalins, comme le sodium (borax), les sels d'amine ou d'ammonium.

12. Procédé selon la revendication précédente, caractérisé en ce que l'on utilise une quantité d'agent retardant comprise entre 0 et 4 parties en poids.

13. Procédé selon l'une de revendications précédentes, caractérisé en ce que l'on utilise, en tant qu'éléments constitutifs, des granulats choisi parmi le sable, pris seul ou en combinaison avec des cendres volantes et/ou des fumées de silice condensée.

14. Procédé selon la revendication précédente, caractérisé en ce que l'on utilise une quantité de granulats comprise entre 60 et 90 parties en poids, de préférence comprise entre 65 et 85 parties en poids.

15. Procédé selon la revendication précédente, caractérisé en ce que l'on utilise une quantité de cendres volantes et/ou de fumées de silice condensée comprise entre 4 et 6 parties en poids.

16. Procédé selon l'une des revendications précédentes, caractérisée en ce que l'on utilise, en tant qu'éléments constitutifs, des additifs, tels que les agents fluidifiants ou les agents antimousse, dans une quantité ne représentant pas plus de 5 parties en poids et de préférence comprise entre 0 et 2 parties en poids.

17. Procédé selon l'une des revendications précédentes, caractérisé en ce que la quantité d'eau est inférieure à 15 % en poids rapporté au poids des constituants à base de phosphore et de magnésium, les granulats, le cas échéant l'agent retardant, et de préférence inférieure à 10%.

18. Procédé selon l'une des revendications précédentes, caractérisé en ce que l'on mélange le polyorganohydrogénosiloxane avec les éléments constitutifs puis avec l'eau.

19. Procédé selon l'une des revendications 1 à 17, caractérisé en ce que l'on mélange le polyorganohydrogénosiloxane avec l'eau puis avec les éléments constitutifs.

20. Composition, caractérisée en ce qu'elle comprend un premier constituant à base de phosphore et un second constituant à base de magnésium, appelés phase liante, et au moins un polyorganohydrogénosiloxane, réparti dans la composition.

21. Composition selon la revendication précédente, caractérisée en ce que les proportions des divers éléments constitutifs sont les suivantes, exprimées en parties en poids :
| | |
|---|---|
| - phase liante : | 10 - 40 |
| proportion MgO/ P₂O₅ : | 1 à 3 |
| - granulats : | 60 - 90 |
| - agent retardant : | 0 - 4 |
| - polyorganohydrogénosiloxane : | ≤ 2 |
| - additifs : | 0 - 5. |

22. Composition selon la revendication précédente, caractérisée en ce que les proportions des divers éléments constitutifs sont les suivantes, exprimées en parties en poids :
| | |
|---|---|
| - phase liante : | 15 - 30 |
| proportion MgO/ P₂O₅ : | 1 à 3 |
| - granulats : | 65 - 85 |
| - agent retardant : | 0 - 4 |
| - silicone alkyle hydrogéné : | ≤ 1 |
| - additifs : | 0 - 2. |

## Claims

1. A process for preparing a phosphomagnesia cement, characterized in that constituent elements comprising a first, phosphorus based constituent and a second, magnesium based constituent, the two constituents being termed the binder phase, are mixed with water and at least one compound selected from polyorganohydrogenosiloxanes.

2. A process according to claim 1, characterized in that the quantity of polyorganohydrogenosiloxane used is less than or equal to 2 parts by weight, preferably less than or equal to 1 part by weight.

3. A process according to any one of the preceding claims, characterized in that the phosphorus based compound is selected from phosphorus pentoxide, phosphoric acid, phosphoric acid derivatives or salts of said acids used either alone or as a mixture.

4. A process according to the preceding claim, characterized in that potassium, magnesium or ammonium phosphates or hydrogen phosphates are used, preferably ammonium dihydrogen phosphate.

5. A process according to any one of the preceding claims, characterized in that the magnesium based compound is selected from magnesium oxide, magnesium hydroxide and magnesium carbonate.

6. A process according to the preceding claim, characterized in that a magnesium oxide is used which optionally comprises a calcium, silicon, aluminium or iron type element, these elements being generally in the form of their oxide or hydroxide.

7. A process according to the preceding claim, characterized in that dead burned magnesia or dolomite is used.

8. A process according to any one of claims 5 to 7, characterized in that the magnesium based constituent has a specific surface area of less than 2 m²/g, more particularly less than 1 m²/g.

9. A process according to any one of the preceding claims, characterized in that the proportion of magnesium based constituent (expressed as the weight of MgO) with respect to that of the phosphorus based constituent (expressed as the weight of P₂O₅) is between 1 and 3.

10. A process according to any one of the preceding claims, characterized in that the phosphorus and magnesium based constituents represent 10 to 40 parts by weight, preferably 15 to 30 parts by weight.

11. A process according to any one of the preceding claims, characterized in that a retarding agent selected from boric acid and its salts, such as alkali metal salts, for example sodium (borax), or amine or ammonium salts, is used as a constituent element.

12. A process according to the preceding claim, characterized in that the quantity of retarding agent is between 0 and 4 parts by weight.

13. A process according to any one of the preceding claims, characterized in that an aggregate selected from sand, either alone or in combination with fuel ash and/or condensed silica smoke, is used as a constituent element.

14. A process according to the preceding claim, characterized in that the quantity of aggregate is between 60 and 90 parts by weight, preferably between 65 and 85 parts by weight.

15. A process according to the preceding claim, characterized in that the quantity of fuel ash and/or condensed silica smoke is between 4 and 6 parts by weight.

16. A process according to any one of the preceding claims, characterized in that an additive such as a liquefying agent or an anti-foaming agent is used as a constituent element, in a quantity of no more than 5 parts by weight, preferably between 0 and 2 parts by weight.

17. A process according to any one of the preceding claims, characterized in that the quantity of water is less than 15% by weight, preferably less than 10% by weight, with respect to the weight of the phosphorus and magnesium based constituents, the aggregate, and the retarding agent if present.

18. A process according to any one of the preceding claims, characterized in that the polyorganohydrogenosiloxane is mixed with the constituent elements then with the water.

19. A process according to any one of claims 1 to 17, characterized in that the polyorganohydrogenosiloxane is mixed with the water then with the constituent elements.

20. A composition, characterized in that it comprises a first, phosphorus based constituent and a second, magnesium based constituent, the two constituents being termed the binder phase, and at least one polyorganohydrogenosiloxane, distributed in the composition.

21. A composition according to the preceding claim, characterized in that the proportions of the various constituent elements are as follows, in parts by weight:
| | |
|---|---|
| • binder phase | 10-40 |
| • MgO/P₂O₅ proportion | 1 to 3 |
| • aggregate | 60-90 |
| • retarding agent | 0-4 |
| • polyorganohydrogenosiloxane | ≤ 2 |
| • additives | 0-5. |

22. A composition according to the preceding claim, characterized in that the proportions of the various constituent elements are as follows, in parts by weight:
| | |
|---|---|
| • binder phase | 15-30 |
| • MgO/P₂O₅ proportion | 1 to 3 |
| • aggregate | 65-85 |
| • retarding agent | 0-4 |
| • hydrogenated alkyl silicone | ≤ 1 |
| • additives | 0-2. |

## Patentansprüche

1. Verfahren zur Herstellung eines Phosphor-Magnesium-Zements, dadurch gekennzeichnet, daß man Komponenten, umfassend einen ersten Bestandteil auf Basis von Phosphor und einen zweiten Bestandteil auf Basis von Magnesium, die als Bindemittelphase bezeichnet werden, mit Wasser und mindestens einer Verbindung, ausgewählt unter den Polyorganohydrogensiloxanen, mischt.

2. Verfahren nach dem vorangegangenen Anspruch, dadurch gekennzeichnet, daß man eine Menge von Polyorganohydrogensiloxan von unter oder gleich zwei Gewichtsteilen und vorzugsweise von unter oder gleich einem Gewichtsteil verwendet.

3. Verfahren nach einem der vorangegangenen Ansprüche, dadurch gekennzeichnet, daß man eine Verbindung auf Basis von Phosphor, ausgewählt unter Phosphorpentoxid, Phosphorsäure, Phosphorsäurederivaten oder Salzen dieser Säuren, wobei diese allein oder in einer Mischung verwendet werden, verwendet.

4. Verfahren nach dem vorangegangenen Anspruch, dadurch gekennzeichnet, daß man Phosphate oder Hydrogenphosphate von Kalium, Magnesium, Anmonium und vorzugsweise Ammoniumdihydrogenphosphat verwendet.

5. Verfahren nach einem der vorangegangenen Ansprüche, dadurch gekennzeichnet, daß man eine Verbindung auf Basis von Magnesium, ausgewählt unter Magnesiumoxid, Magnesiumhydroxid, Magnesiumcarbonat, verwendet.

6. Verfahren nach dem vorangegangenen Anspruch, dadurch gekennzeichnet, daß man ein Magnesiumoxid verwendet, das gegebenenfalls mindestens ein Element vom Typ Calcium, Silicium, Aluminium oder ferner Eisen umfaßt, wobei diese Elemente im allgemeinen in Form eines Oxids oder Hydroxids vorliegen,

7. Verfahren nach dem vorangegangenen Anspruch, dadurch gekennzeichnet, daß man das als "dead burned" bezeichnete Magnesiumoxid oder Dolomit verwendet.

8. Verfahren nach einem der Ansprüche 5 bis 7, dadurch gekennzeichnet, daß man einen Bestandteil auf Basis von Magnesium verwendet, dessen spezifische Oberfläche unter 2 m²/g und insbesondere unter 1 m²/g beträgt.

9. Verfahren nach einem der vorangegangenen Ansprüche, dadurch gekennzeichnet, daß der Anteil an Bestandteil auf Basis von Magnesium (ausgedrückt als Gewicht von MgO) im Verhältnis zu jenem an Bestandteil auf Basis von Phosphor (ausgedrückt als Gewicht von P₂O₅) zwischen 1 und 3 beträgt.

10. Verfahren nach einem der vorangegangenen Ansprüche, dadurch gekennzeichnet, daß die Bestandteile auf Basis von Phosphor und von Magnesium 10 bis 40 Gewichtsteile und vorzugsweise 15 bis 30 Gewichtsteile ausmachen.

11. Verfahren nach einem der vorangegangenen Ansprüche, dadurch gekennzeichnet, daß man als Komponente ein Verzögerungsmittel, ausgewählt unter Borsäure und deren Salzen, wie den Alkalimetallsalzen, z.B. dem Natriumsalz (Borax), den Aminsalzen oder Amoniumsalzen, verwendet,

12. Verfahren nach dem vorangegangenen Anspruch, dadurch gekennzeichnet, daß man eine Menge an Verzögerungsmittel zwischen 0 und 4 Gewichtsteilen verwendet.

13. Verfahren nach einem der vorangegangenen Ansprüche, dadurch gekennzeichnet, daß man als Komponenten Zuschläge oder Granulate, ausgewählt aus Sand, die allein oder in Kombination mit Flugstaub oder -asche und/oder Stäuben von kondensiertem Siliciumdioxid eingesetzt werden, verwendet.

14. Verfahren nach dem vorangegangenen Anspruch, dadurch gekennzeichnet, daß man eine Menge an Zuschlägen zwischen 60 und 90 Gewichtsteilen, vorzugsweise zwischen 65 und 85 Gewichtsteilen verwendet.

15. Verfahren nach dem vorangegangenen Anspruch, dadurch gekennzeichnet, daß man eine Menge an Flugstaub und/oder Stäuben von kondensiertem Siliciumdioxid zwischen 4 und 6 Gewichtsteilen verwendet.

16. Verfahren nach einem der vorangegangenen Ansprüche, dadurch gekennzeichnet, daß man als Komponenten Zusatzstoffe, wie Verflüssiger oder Schaumverhütungsmittel, in einer Menge verwendet, die nicht mehr als 5 Gewichtsteile ausmacht und vorzugsweise zwischen 0 und 2 Gewichtsteilen beträgt.

17. Verfahren nach einem der vorangegangenen Ansprüche, dadurch gekennzeichnet, daß die Menge an Wasser unter 15 Gew.-% bezogen auf das Gewicht der Bestandteile auf Basis von Phosphor und von Magnesium, der Zuschläge, gegebenenfalls des Verzögerungsmittels und vorzugsweise unter 10% beträgt.

18. Verfahren nach einem der vorangegangenen Ansprüche, dadurch gekennzeichnet, daß man das Polyorganohydrogensiloxan mit den Komponenten und dann mit Wasser mischt.

19. Verfahren nach einem der Ansprüche 1 bis 17, dadurch gekennzeichnet, daß man das Polyorganohydrogensiloxan mit Wasser und dann mit den Komponenten mischt.

20. Zusammensetzung, dadurch gekennzeichnet, daß sie einen ersten Bestandteil auf Basis von Phosphor und einen zweiten Bestandteil auf Basis von Magnesium, die als Bindemittelphase bezeichnet werden, und mindestens ein Polyorganohydrogensiloxan, verteilt in der Zusammensetzung, umfaßt.

21. Zusammensetzung nach dem vorangegangenen Anspruch, dadurch gekennzeichnet, daß die Anteile der verschiedenen Komponenten die Folgenden, ausgedrückt als Gewichtsteile, sind:
| | |
|---|---|
| - Bindemittelphase: | 10 - 40 |
| Verhältnis MgO/P₂O₅: | 1 bis 3 |
| - Zuschläge: | 60 - 90 |
| - Verzögerungsmittel: | 0 - 4 |
| - Polyorganohydrogensiloxan: | ≤ 2 |
| - Zusatzstoffe: | 0 - 5. |

22. Zusammensetzung nach dem vorangegangenen Anspruch, dadurch gekennzeichnet, daß die Anteile der verschiedenen Komponenten die Folgenden, ausgedrückt als Gewichtsteile, sind:
| | |
|---|---|
| - Bindemittelphase: | 15 - 30 |
| Verhältnis MgO/P₂O₅: | 1 bis 3 |
| - Zuschläge: | 65 - 85 |
| - Verzögerungsmittel: | 0 - 4 |
| - Hydriertes Alkylsilikon: | ≤ 1 |
| - Zusatzstoffe: | 0 - 2. |
